# EUROPEAN PATENT SPECIFICATION

(11) **EP 4 183 983 B1**
(45) Date of publication and mention of the grant of the patent: **27.08.2025**
(21) Application number: 21210036.6
(22) Date of filing: 23.11.2021
(51) Int. Cl.: F01D 9/02, F01D 11/00, F16J 15/08

(54) **GAS TURBINE ASSEMBLY FOR POWER PLANT HAVING A LOW WEAR MEMBRANE SEAL ARRANGEMENT FOR SEALING THE COMBUSTOR TO TURBINE INTERFACE, AND METHOD FOR RETROFITTING A GAS TURBINE ASSEMBLY**
GASTURBINENANORDNUNG FÜR EIN KRAFTWERK MIT EINER VERSCHLEISSARMEN MEMBRANDICHTUNGSANORDNUNG ZUR ABDICHTUNG DER BRENNKAMMER-TURBINENSCHNITTSTELLE UND VERFAHREN ZUR NACHRÜSTUNG EINER GASTURBINENANORDNUNG
ENSEMBLE DE TURBINE À GAZ POUR UNE CENTRALE ÉLECTRIQUE AYANT UN DISPOSITIF D'ÉTANCHÉITÉ À MEMBRANE À FAIBLE USURE POUR SCELLER LA CHAMBRE DE COMBUSTION SUR L'INTERFACE DE TURBINE ET PROCÉDÉ D'ENTRETIEN D'UN ENSEMBLE DE TURBINE À GAZ

(43) Date of publication of application: 24.05.2023
(73) Proprietor: Ansaldo Energia Switzerland AG, 5400 Baden (CH)
(72) Inventor: MARLOW, Paul, 5400 BADEN (CH)
(74) Representative: Studio Torta S.p.A.

(56) References cited:
- EP-A1- 3 822 458
- US-A1- 2010 011 774
- US-A1- 2015 102 566
- US-B1- 6 431 825

## Description

### Field of the Invention

The present invention relates to the technical field of the gas turbine assemblies for power plants. As known, in this kind of assemblies an incoming air flow is compressed and after ignited in a combustor with an added fuel to produce a hot gas flow. This hot gas flow expands in a turbine for generating a rotating work on a rotor in turn connected to a generator. Due to the very high temperature of the working hot gas, some components have to be cooled and therefore beside of the hot gas flow a cooling flow (usually cooling air) is circulating inside the gas turbine. As known, these two flows have to be kept separated. In particular, for this scope the combustor to turbine interface is provided with a membrane seal connecting the inner combustor casing to the inner face of the turbine vane platform for dividing the hot gas flow (flowing outward or above the vane platform) from the cooling air flow (flowing inward or below the vane platform). The above combustor to turbine interface is configured to allow some relative movements depending on the working condition. These movements and the high pressure acting on the seal cause wear, in particular wear in the upstream portion of the casing groove supporting the seal. In this technical content, the repair process for the casing is difficult, time consuming and expensive. The present invention will refer to the technical problem of how to eliminate casing wear as well as offering a simple (cheaper) repair process for worn casings. Additionally, the present invention- increases the membrane seal lifetime and reduces seal leakage, which improves gas turbine performance.

### Description of prior art

As known, a gas turbine assembly for power plants comprises a compressor assembly, a combustor assembly and a turbine assembly. The compressor assembly is configured for compressing incoming air supplied at a compressor inlet. The compressed air leaving the compressor assembly flows into a volume (called "plenum") and from there into the combustor assembly. This combustor assembly comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and by passing in the turbine assembly performs a rotating work on the rotor connected to a generator. As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine comprises a first and a second combustor or combustion stages wherein each combustor is provided with a plurality of burners in a combustion chamber. Today at least two different kinds of sequential gas turbines are known. According to a first embodiment, the first and the second combustor are annular shaped and are physically separated by a stage of turbine blades, called high pressure turbine. Downstream the second combustor a second turbine unit is present (called low pressure turbine). This kind of gas turbine is produced by the Applicant and is available on the market as "GT26". According to a second embodiment of a sequential gas turbine, the gas turbine is not provided with the high-pressure turbine and the combustor assembly is realized in form of a plurality of can-combustors. Each can-combustor comprises a first combustor and a second combustor arranged directly one downstream the other inside a common can shaped casing. Also, this second kind of a sequential gas turbine is produced by the Applicant and is available on the market as "GT36". These two examples of gas turbine assemblies (GT26 and GT36) have been cited only as non-limiting examples wherein the present invention (i.e. an improved membrane seal device as will be described in the following) can be applied during service or can be incorporated from the beginning.

In almost all kind of gas turbine assemblies, seals are used for sealing for separating the hot gas flow from the cooling air flow. In particular, the sealing of the circumferential interface between the combustor outlet and the first vane row of the turbine is today a challenge because this sealing has to be guaranteed during all operating conditions. Indeed, in this interface the vane usually has to be cooled (the temperature of the hot gas leaving the combustor is very high) and moreover the vane can move in both the axial and radial directions.

According to a first prior art example, the sealing arrangement of the combustor to turbine interface comprises a honeycomb seal arrangement. In this example, each first vane comprises an inner platform. The word "inner" means near to the turbine axis in contrast with the outer end of the vane connected to the outer supporting casing surrounding the turbine. This platform comprises of labyrinth teeth acting against a honeycomb seal fixed to the combustor end (i.e. to the end of a combustor liner segment carrier). The above honeycomb sealing arrangement involves some drawbacks. In particular, a full seal loss during operation may occurs or a simply partial seal delamination can lead to high leakages in this interface.

According to a second prior art example, the sealing arrangement of the combustor to turbine interface comprises a membrane seal arrangement extending radially from the downstream end of the combustor liner segment carrier (in the following combustor casing) to the inner face of the turbine vane platform. In particular, this membrane seal is comprises a membrane connecting an inner enlarged end housed in a seat or groove in the combustor casing and an outer enlarged end housed in a seat or groove in the vane inner platform. This solution allows relative vane movements, particularly in the axial direction. Unfortunately, this prior art solution using a single membrane seal (for instance a "dog-bone" or an asymmetric membrane seal) involves some drawbacks. In particular, the upstream face of the groove in the casing and housing the inner end of the seal is affected by wear due to the above mentioned operational movements and due to the high pressure pushing the small contact surface of the membrane seal against the upstream surface of the casing groove. This wear implies periodical casing repair processes that unfortunately are expensive and not easy to be implemented. This wear also reduces the lifetime of the membrane seal, as well as allowing cooling air to leak past the wear damaged sealing surface reducing gas turbine performance.

EP3822458 discloses a gas turbine according to the preamble of claim 1.

US6431825 discloses a seal between two static turbine parts is provided with a carrier piece comprising a flat metal piece with a middle piece and end pieces each of which is arranged in a groove in the static turbine parts.

US2010011774 refers to a method of refurbishing a seal land on a transition piece of a turbomachine by applying a wear strip to a wall surface of the seal land, and covering the wear strip with a slot protector.

### Disclosure of the invention

A primary object of the present invention is to provide a gas turbine suitable for overcoming the above problems of the prior art. In particular, the primary object of the present invention is to provide a gas turbine having an improved seal arrangement (or seal device) suitable for sealing the combustor to turbine interface and that allow larger displacements of components with low wear, in particular without combustor casing wear. A gas turbine suitable for being provided with the new membrane seal arrangement of the present invention is a gas turbine for power plant as claimed in claim 1. A suitable gas turbine is comprising:
- at least one turbine provided with at least one row of stator vanes (first vanes) configured for guiding a hot gas flow leaving the combustor; wherein each vane comprises an inner platform;
- a combustor provided with a casing, in particular a stationary inner casing positioned radially inwards with respect to the vane platform;
- a membrane seal device at the combustor to turbine interface extending between the downstream end of the combustor casing and the inner face of the vane platform for isolating the hot gas from flow flowing above the platform from the cooling air flow flowing (counter flow) below the platform.

Although not all components have been listed above, the skilled person in the field of gas turbines for power plants will know that a gas turbine for this purpose is an assembly comprising:
- a compressor intaking air and configured for compressing this air;
- a combustor assembly configured for injecting fuel in the compressed air and for burning this mixture in order to create a hot gas flow.

The words "at least one turbine" mean that a gas turbine according to the present invention may comprise a single-stage turbine or a high-pressure turbine followed by a low-pressure turbine. Also, the combustor assembly may comprise a single-stage combustor or two sequential stages of combustion. In this last case, these two stages of combustion may be divided by a turbine stage (the above high-pressure turbine) or may be connected directly in series in a common can-shaped casing (a so-called can-combustor gas turbine).

As foregoing mentioned, the combustor to turbine interface, i.e. the interface is the passage between the downstream end of the combustor casing (or liner segment carrier) and the first row of turbine vanes. As known, at this interface there is the main hot gas flow, which flows from upstream to downstream into the vane aerofoils and a cooling air flow (for instance compressed air) flowing in a channel or volume below (radially inwards) the vane platform with a seal. Thus, volume on the downstream side of the seal is called "the higher-pressure volume" because is fed with high pressure cooling air and the volume on the upstream side the seal is called "the lower-pressure volume". As common in the field of gas turbines, the words "upstream" and "downstream" refer to the hot gas flow direction. The words "inwards/inner" and "outwards/outer" refer the radial position relative to the axis of the gas turbine. Also, the words "axially", "radially" and "circumferentially" refer to the axis of the gas turbine.

The foregoing cited cooling air flowing below the vane platform (radially inwards and in counter flow) is used for cooling the vane and it is important to avoid leakage of this cooling air toward the hot gas flowing above the vane platform (radially outwards). In view of this problem, as foregoing cited, the closest prior art for the present invention relates to a single membrane seal. This known membrane seal comprises:
- an inner end (enlarged) housed in a groove obtained in combustor casing downstream end;
- an outer end (enlarged) housed in a groove in the inner face of vane platform;
- a membrane connecting inner and outer ends.

The above definition of the membrane seal refers to the cross-section of the seal that extends circumferentially along the combustor to turbine interface. For instance, the entire circumferential extent of the combustor to turbine interface may be sealed by two half membrane seals. In any case a skilled person very well knows this seal.

Starting from this prior art, instead of the above single membrane seal the present invention provides an improved seal arrangement comprising two pieces; namely a membrane seal (exactly as described and as used today) and a strip seal arranged between the inner end of the membrane seal and the upstream face of the inner groove in the combustor casing. In other words, according to the invention the membrane seal (due to the pressure of the cooling air) does not contact anymore the upstream face of the groove on the combustor casing because the strip seal is provided in between. For this reason, the groove of the combustor inner casing discloses an enlarged seat configured for housing not only the membrane seal but also the strip seal.

In this way no wear occurs on the casing because the upstream face of the inner casing groove is no longer in contact with an operationally moving membrane seal but to the in-operation stationary strip seal. Thus, wear of the casing is eliminated and absorbed by the "sacrificial" strip seal that is easy to replace during an outage, when the gas turbine is disassembled for periodic servicing.

The strip seal halves are circumferentially restrained in position by at least an axial pin inserted in a corresponding hole in the casing.

Preferably, the strip seal and the inner groove are shaped to avoid relative displacements (in particular radial displacements) .

Preferably the strip seal may be produced from a material more resistant to wear than the casing material (for instance the same material chosen for the membrane seal) .

Preferably, at least the wear (downstream) surface of the strip seal has an anti-wear coating (for instance chrome carbide). Also, the corresponding face of the inner end of the membrane seal may be similarly coated.

Preferably, the strip seal has an L-shaped profile, to replace the entire upstream surface of a worn casing groove.

Preferably, the seal strip and casing groove are provided with an axial retention feature to prevent loss of the strip seal during gas turbine shutdown in the eventuality of a heavily worn interface between the membrane seal and the strip seal. This feature can be reached by providing an angled L-shaped strip seal.

Preferably, the sealing surface between the strip seal and the casing is located at the outer radius to protect the groove against oxidation. In operation the seal strip is pushed against this sealing surface by the pressure drop across the membrane seal preventing the eventuality of hot gas entering the groove from the cavity between the turbine vane and combustor.

Preferably, along the entire combustor to turbine circumferential interface two half strip seals are provided (for gas turbine assembly reasons). In particular, the ends of these two strip seal halves may comprise corresponding protruding and recessing portions to allow overlap in operation to reduce leakage at these two positions.

Finally, the present invention refers to a method as claimed in claim 7. The method is for retrofit in a gas turbine wherein the former standard single membrane seal is replaced with a new two-piece seal arrangement according to the present invention. For this reason, the method comprises also the steps of enlarging the casing groove for housing also the strip seal, in particular by removing part of the upstream face of the casing groove, and of arranging the strip seal in the inner groove.

It is to be understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figures 1 and 2 are schematic views of two gas turbine assemblies wherein the sealing according the present invention can be applied;
- figure 3 in an enlarged view of the portion labelled as II in figure 1;
- figures 4 e 5 are enlarged view of the portion labelled as IV in figure 3 according to two different working conditions;
- figure 6 discloses a cross-section of an embodiment of a membrane seal device according to the present invention;
- figures 7-10 discloses an example of a first component of a membrane seal device according to the present invention;
- figures 11-12 discloses an example of a groove suitable for housing a membrane seal device according to the present invention.

### Detailed description of preferred embodiments of the invention

In cooperation with the attached drawings, the technical contents and detailed description of the present invention are described thereinafter according to preferred embodiments, being not used to limit its executing scope. Any modification made according to appended claims is all covered by the claims.

Reference will now be made to the drawing figures to describe the present invention in detail.

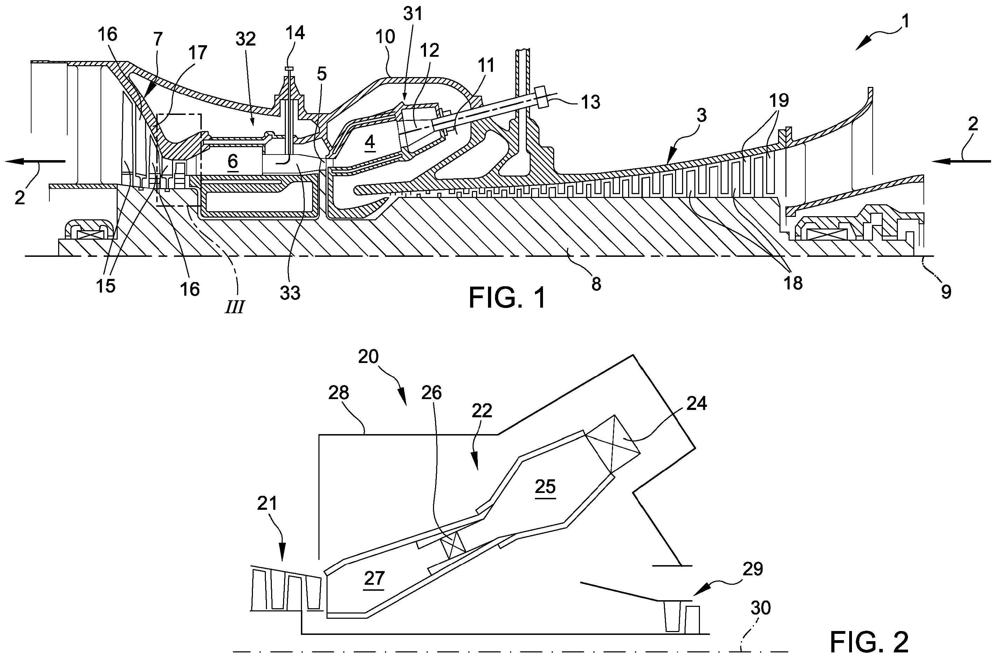

Reference is now made to Fig. 1 that is a schematic view of a first non-limiting example of a gas turbine assembly (or only gas turbine) for power plant 1 that can be provided with the new membrane seal device according to the present invention. According to the embodiment of figure 1 this gas turbine is a so called "sequential-combustion gas turbine" provided with a high-pressure and a low-pressure turbine. Following the main gas flow 2, the gas turbine 1 of figure 1 comprises a compressor 3, a first combustor 31, a high-pressure turbine 5, a second combustor 32 and a low-pressure turbine 7. The compressor 3 and the two turbines 5, 7 are part of or are connected to a common rotor 8 rotating about an axis 9 and surrounded by a concentric casing 10. The compressor 3 is supplied with air and has rotating blades 18 and stator vanes 19 configured to compress the air entering the compressor 3. Exiting the compressor, the compressed air flows into a plenum 11 and from there into numerous first burners 12 of the first combustor 31 arranged in a circular pattern around the axis 9. Each first burner 12 is configured for injecting at least one type of fuel (connected to at least one first fuel supply 13) into the compressed airflow. Preferably, this first burner 12 may be defined as a "premix" burner because is configured for mixing the compressed air and the injected fuel before the ignition. The fuel/compressed air mixture flows into a first combustion chamber 4 annularly shaped, where this mixture ignites. During start-up this mixture is initially ignited by an ignitor, for instance by a spark igniter; once ignited the ignition is self-sustaining and the ignitor is turned off. The resulting hot gas leaves the first combustor chamber 4 and is partially expanded in the high-pressure turbine 5 performing work on the rotor 8. Downstream of the high-pressure turbine 5 the partially-expanded hot gas flows into a row of second burners 33 where at least one type of fuel is injected by fuel lances 14 (each burner has one lance). The partially-expanded gas has a high temperature and contains sufficient oxygen for further combustion that occurs by self-ignition in the second combustion chamber 6 arranged downstream of the row second burners 33. These second burners 33 are also called "reheat" burners. The reheated hot gas leaves the second combustion chamber 6 and flows in the low-pressure turbine 7 where it is expanded performing work on the rotor 8. The low-pressure turbine 7 comprises numerous stages: rows of rotor blades 15 arranged in series in the main flow direction. Such rows of blades 15 are interposed by rows of stator vanes 16. The rotor blades 15 are connected to the rotor 8 whereas the stator vanes 16 are connected to a vane carrier 17 that is a concentric casing surrounding the low-pressure turbine 7. Although not visible in figure 1, this gas turbine 1 has numerous seals, in particular many membrane seals arranged, for instance, at the interface of the second combustor to first vane row of the low-pressure turbine. In view of the above, a gas turbine as disclosed in figure 1 may be provided with the new membrane seal device of the present invention.

Reference is now made to Fig. 2 that is a schematic view of a second not-limiting example of a gas turbine that can be provided with the new membrane seal device according to the present invention. This gas turbine 20 is also a "sequential-combustion gas turbine" that can be provided with the innovative features according to the present invention. In particular, figure 2 shows a partial view of a gas turbine 20 with a compressor 29, a turbine 21 and a sequential combustor 22. The sequential combustor 22 of figure 2 has numerous so-called can combustors, i.e. numerous bolt-on casings wherein there are numerous of first burners 24, for instance four first burners 24, a first combustion chamber 25, numerous second burners 26, and a second combustion chamber 27. Upstream of the second burner 26 an mixer may be provided for adding air into the hot gas leaving the first combustion chamber 25 and creating turbulence in the air/hot gas mixture. The sequential combustor arrangement is at least in part housed in an outer casing 28 supporting the individual can combustors 22 arranged in a circular pattern around the turbine axis 23. At least one type of fuel is introduced via a first fuel injector (not shown) into the first burners 24 wherein the fuel is mixed with the compressed air supplied by the compressor 29. Also, each of the first burners 24 of this embodiment is a "premix" burner configured for generating a premixed flame. When the hot gas leaves the second combustion chamber 27 it then expands in the turbine 21 performing work on a rotor 30. Although not visible in figure 2, this gas turbine 20 comprises numerous seals, including membrane seals, which could be arranged for instance at the can combustors to first turbine vane interface. In view of the above, a gas turbine as disclosed in figure 2 may be provided with the new membrane seal of the present invention.

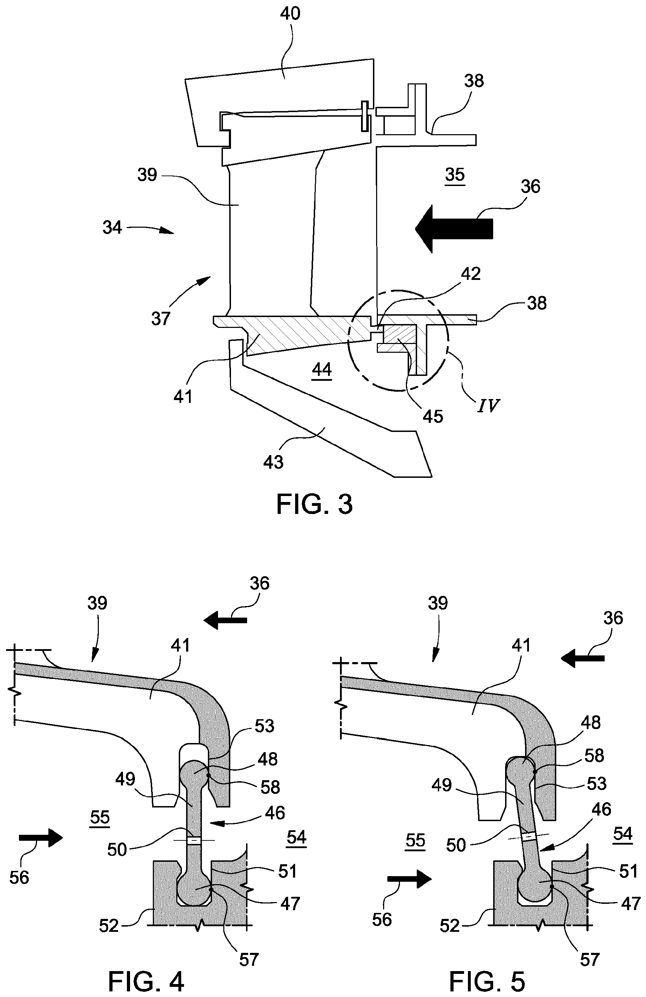

Reference is made to Figure 3 which is a schematic enlarged view of the portion of figure 1 labelled as III. In particular Figure 3 discloses a first prior art practice for sealing the interface between the second combustor and the first row of vanes of the low pressure turbine. This gas turbine 34 comprises a combustor schematically represented with reference 35 producing a hot gas flow 36. Moreover, figure 3 shows:
- a combustor liner or casing 38,
- a first row of vanes 39, wherein each vane is outwardly supported by a casing 40 and inwardly comprises a vane platform 41 with a tooth 42 facing the combustor liner 38,
- a rotor cover 43 located between the rotor (not shown) and the vane 39 with a high pressure cooling-air passage 44, and
- a honeycomb seal 45 attached to the liner 38 that cooperates with the vane tooth 42 for avoiding the cooling air to enter into the hot gas flow 36.

As described in the prior art chapter, this prior art practice has drawbacks, particularly the limited capacity to accommodate operational movement of the vane 39. For this reason, an alternative solution of the prior art practice is disclosed in figures 4 and 5. According to this example, the sealing arrangement comprises a single "dog-bone" membrane seal 46. This membrane seal 46 has an enlarged upper end 48 and a enlarged lower end 47 and a middle a straight central membrane 49 (preferably provided with a purge air hole 50). The inner end 47 is housed in a circumferential recess or groove 51 obtained in the downstream end of the casing 52. This casing 52 may be part of a combustor liner or of a rotor cover. The outer end 48 is housed in a circumferential recess or groove 53 obtained in the inner face of the vane platform 41. The two ends involve a continuous circumferential contact line with the corresponding grooves (positions 57 and 58) to minimize cooling-air 56 leakage into the main flow hot gas 36. The volume 54 upstream the seal 46 is a lower-pressure volume whereas the downstream volume 55 (fed with counter flow cooling air) is a higher-pressure volume. Figure 4 shows the assembled position. In operation, the vane platform 39 has a large radially inwards and axially downstream movement relative to fixed parts of the system. Figure 5 discloses this operation condition wherein the high-pressure cooling air creates a high force at the contact point 57 shown in figure 5, i.e. against the upstream face of the casing groove 51. This contact force at 57, and the operational movements of the membrane seal, cause wear on the upstream face of the casing groove 51. This wear in turn requires periodical repair.

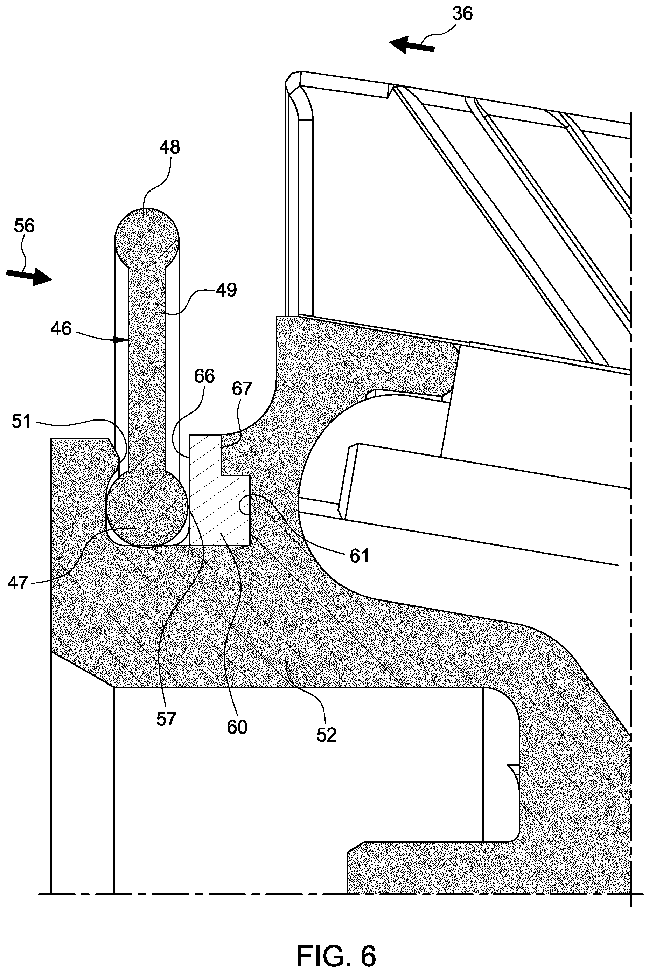

As disclosed in the summary of the invention chapter, the present invention offers a solution for overcoming the above drawbacks (casing groove wear). According to the general definition of the invention, the new solution proposed is to replace the single membrane seal with a seal arrangement comprising two pieces. The first piece is a membrane seal, i.e. a dog-bone or an asymmetric membrane seal that it could be also made according to the prior art. The second piece is a strip seal interposed between the inner end of the membrane seal and the upstream face of the casing groove to prevent wear of this last component. Figure 6 discloses a cross-section of an embodiment of the membrane seal arrangement according to the present invention. In this figure 6 some numerical references used in figures 4 and 5 have been reproduced because a lot of components are in common. Indeed, in summary, the main difference between the prior art and this invention is to provide the above mentioned strip seal interposed between the upstream face of the inner end of the membrane seal and the upstream face of the casing groove. Of course, for this reason the shape of the casing groove has to be modified to also house the additional strip seal. In figure 6 the new references 60 and 61 respectively refer to the new added strip seal and to the upstream face of the casing groove wherein the casing groove has been upstream enlarged. According to the example of figure 6, the strip seal 60 has an L-shaped cross section, in particular the strip seal 60 has an upstream face with a radial retention feature 67 that fits into the upstream recess 61 in the casing groove 51. In operation, the downstream face 66 of the strip seal is in contact with the inner end 47 of the membrane seal 46 at le line 57. Therefore, preferably, at least at the line of contact 57 between the membrane seal and strip seal has an anti-wear coating is provided (preferably the downstream face 66 of the strip seal has an anti-wear coating).

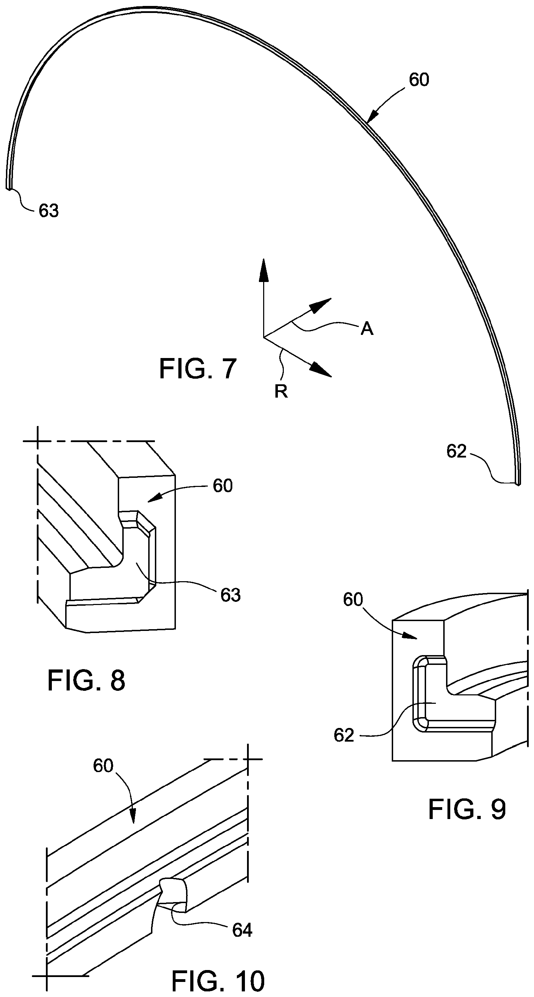

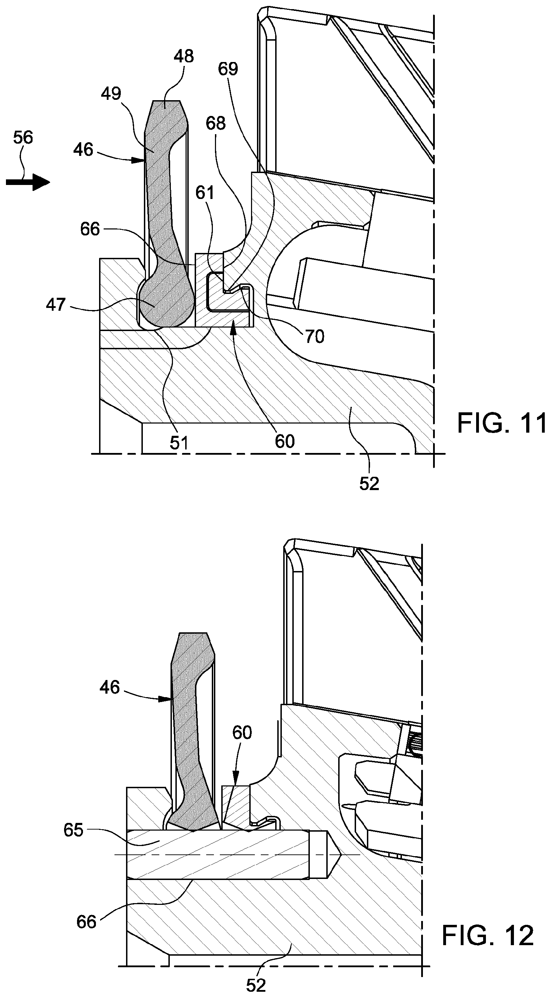

Figures 7-10 refer to the strip seal 60. In particular, figure 7 discloses the circumferential extent of a strip seal half 60 (approximately 180° preferably) and figures 8 and 9 disclose the two ends of each strip seal half 60. According to figures 8 and 9, the end 63 discloses a protruding portion whereas the opposite end 64 discloses a corresponding recess so that two strip seal 60 may overlap in operation sealing entire circumferential extent of the interface to reduce leakage. Figure 10 discloses a middle portion of the strip seal half 60 wherein there is an axial hole 64 to allow assembly of a fixation pin (reference 65 in figure 12) configured to restrain the strip seal half 60 inside the groove 51 in the correct circumferential position.

Finally, figures 11-12 disclose in detail the seal strip and the groove 51 as it has been modified for being suitable for housing a two-piece seal arrangement according to the present invention, i.e. the upstream side of the groove has been enlarged to house the additional strip seal. Figure 11 discloses the operating positions of pressure loaded membrane seal 46 (pressure direction 56) and seal strip 60 in the casing groove 51. The upstream side of inner end 47 of the membrane seal 46 is pressed into line contact 57 against the downstream face 66 of the seal strip 60. Thus, the upstream side 68 of the strip seal 60 is in turn pressed into contact with the upstream face 61 of the casing groove 51. Axial retaining features 70 69 are provided between the strip seal 60 and casing groove recess in order to prevent loss of the seal strip 60 during gas turbine shutdown if the seals mutual contact surfaces should become heavily worn. Finally, figure 12 discloses the axial hole 66 obtained in the casing 52 for allowing the assembly of the circumferential fixation pin 65 passing also in the hole 64 of the seal strip 60.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the invention as defined by the appended claims.

## Claims

1. A gas turbine for power plant; the gas turbine (1, 20) comprising:
- at least a turbine (5, 7, 21, 34) provided with a first row of stator vanes (16, 39) configured for guiding an hot gas flow (36); each vane (16, 39) comprising a platform (41);
- a combustor comprising an inner casing (52);
- a membrane seal device extending from the combustor casing (52) to the vane platform (41) for isolating the hot gas flowing above the vane platform (41) from a higher-pressure cooling air flowing below the vane platform (41);
the seal arrangement comprises a membrane seal (46);
wherein the membrane seal (46) comprises:
- an inner end (47) housed in a groove (51) obtained in the combustor casing (52), the groove (51) being provided with a upstream face (61);
- an outer end (48) housed in a groove (53) obtained in the vane platform (41);
- a membrane (49) connecting the inner end (47) to the outer end (48);
**characterized in that** the seal arrangement comprises a strip seal (60) housed in the casing groove (51) and arranged between the inner end (47) of the membrane seal (46) and the upstream face (61) of the casing groove (51);
wherein an axial pin (65) is provided configured for keeping in circumferential position the strip seal (60) inside the casing groove (51); the casing (52) and the strip seal (60) comprising axial holes (64, 66) for housing the pin (65).

2. Gas turbine as claimed in any one of the foregoing claims, wherein the upstream face of the strip seal (60) and the upstream face of the casing groove (51) are shaped to avoid relative axial movements.

3. Gas turbine as claimed in claim 2, wherein the strip seal comprises an upstream surface (61) in contact with and matching the upstream face (68) of the casing groove (51).

4. Gas turbine as claimed in claim 2 or 3, wherein the casing groove and seal strip have axial retention features (69 70).

5. Gas turbine as claimed in any one of the foregoing claims, wherein the strip seal (60) comprises a downstream surface (66) in contact with the inner end (47) of the membrane seal (46), at least the downstream surface (66) of the seal strip being anti-wear coated.

6. Gas turbine as claimed in any one of the foregoing claims, wherein two strip seal halves (60) are provided for sealing the entire combustor to turbine circumferential interface; the coupling ends of these two strip seals comprises a protruding portion (63) at one end and a recessed portion (64) at the other end.

7. A method for retrofitting gas turbines for power plant already in service; the method comprising the steps of:
a) providing a gas turbine assembly according to the preamble of claim 1 comprising a plurality of former single membrane seals;
b) providing a plurality of seals according to the characterizing portion of claim 1;
c) removing the former single membrane seals;
d) enlarging the casing groove for being suitable for housing the seal arrangement according to the characterizing portion of claim 1;
e) arranging the seals according to the characterizing portion of claim 1 into the enlarged casing groove.

8. Method as claimed in claim 7, wherein the step a) of providing a gas turbine assembly is performed by providing a sequential gas turbine (1) comprising a high-pressure turbine (5) and a low-pressure turbine (7).

9. Method as claimed in claim 7, wherein the step a) of providing a gas turbine assembly is performed by providing a sequential gas turbine (20) comprising a plurality of can combustors (22).

10. Method as claimed in any one of the foregoing claims from 7 to 9, wherein the step c) of replacing the former membrane seals (46) with the seals (46 and 60) according to claim 1 is performed by addition of strip seal (60) seals arranged at the combustor to turbine interface.

## Patentansprüche

1. Gasturbine für ein Kraftwerk; wobei die Gasturbine (1, 20) aufweist:
- mindestens eine Turbine (5, 7, 21, 34), die mit einer ersten Reihe von Statorschaufeln (16, 39) ausgestattet ist, die dazu konfiguriert sind, einen heißen Gasstrom (36) zu leiten; wobei jede Statorschaufel (16, 39) eine Plattform (41) aufweist;
- eine Brennkammer, die ein inneres Gehäuse (52) aufweist;
- eine Membrandichtungseinrichtung, die sich von dem Brennkammergehäuse (52) zur Statorschaufelplattform (41) erstreckt, um das oberhalb der Statorschaufelplattform (41) strömende heiße Gas von einer einen höheren Druck aufweisenden, unterhalb der Statorschaufelplattform (41) strömenden Kühlluft zu trennen;
die Dichtungsanordnung eine Membrandichtung (46) aufweist;
wobei die Membrandichtung (46) aufweist:
- ein inneres Ende (47), das in einer in dem Brennkammergehäuse (52) erhaltenen Nut (51) untergebracht ist, wobei die Nut (51) mit einer stromaufwärts gelegenen Fläche (61) ausgestattet ist;
- ein äußeres Ende (48), das in einer in der Statorschaufelplattform (41) erhaltenen Nut (53) untergebracht ist;
- eine Membran (49), die das innere Ende (47) mit dem äußeren Ende (48) verbindet;
**dadurch gekennzeichnet, dass** die Dichtungsanordnung eine Streifendichtung (60) aufweist, die in der Dichtungsnut (51) untergebracht und zwischen dem inneren Ende (47) der Membrandichtung (46) und der stromaufwärts gelegenen Fläche (61) der Gehäusedichtung (51) angeordnet ist;
wobei ein axialer Stift (65) vorgesehen ist, der dazu konfiguriert ist, die Streifendichtung (60) innerhalb der Gehäusenut (51) in einer Umfangsrichtungsposition zu halten; wobei das Gehäuse (52) und die Streifendichtung (60) axiale Bohrungen (64, 66) aufweisen, um den Stift (65) darin unterzubringen.

2. Gasturbine gemäß einem der vorhergehenden Ansprüche, wobei die stromaufwärts gelegene Fläche der Streifendichtung (60) und die stromaufwärts gelegene Fläche der Gehäusenut (51) dazu geformt sind, axiale Relativbewegungen zu vermeiden.

3. Gasturbine gemäß Anspruch 2, wobei die Streifendichtung eine stromaufwärts gelegene Oberfläche (61) aufweist, die mit der stromaufwärts gelegenen Fläche (68) der Gehäusenut (51) in Kontakt ist und mit dieser zusammenpasst.

4. Gasturbine gemäß Anspruch 2 oder 3, wobei die Gehäusenut und die Streifendichtung Merkmale (69, 70) zur axialen Halterung aufweisen.

5. Gasturbine gemäß einem der vorhergehenden Ansprüche, wobei die Streifendichtung (60) eine stromabwärts gelegene Oberfläche (66) aufweist, die mit dem inneren Ende (47) der Membrandichtung (46) in Kontakt ist, wobei mindestens die stromabwärts gelegene Oberfläche (66) der Streifendichtung mit einer Verschleißschutzbeschichtung versehen ist.

6. Gasturbine gemäß einem der vorhergehenden Ansprüche, wobei zwei Streifendichtungshälften (60) vorgesehen sind, um die gesamte umlaufende Trennfläche zwischen Brennkammer und Turbine abzudichten; die Kopplungsenden dieser beiden Streifendichtungen einen vorstehenden Teil (63) an einem Ende und einen vertieften Teil (64) an dem anderen Ende aufweisen.

7. Verfahren zum Nachrüsten von Gasturbinen für ein Kraftwerk, das schon in Betrieb ist; wobei das Verfahren die folgenden Schritte aufweist:
a) Bereitstellen einer Gasturbinenanordnung gemäß dem einleitenden Teil von Anspruch 1, aufweisend eine Mehrzahl bestehender eine einzige Membran aufweisender Dichtungen;
b) Bereitstellen einer Mehrzahl von Dichtungen gemäß dem kennzeichnenden Teil von Anspruch 1;
c) Entfernen der bestehenden eine einzige Membran aufweisenden Dichtungen;
d) Vergrößern der Gehäusenut, sodass sie zur Unterbringung der Dichtungsanordnung gemäß dem kennzeichnenden Teil von Anspruch 1 geeignet ist;
e) Anordnen der Dichtungen gemäß dem kennzeichnenden Teil von Anspruch 1 in der vergrößerten Gehäusenut.

8. Verfahren gemäß Anspruch 7, wobei der Schritt a) zum Bereitstellen einer Gasturbinenanordnung dadurch durchgeführt wird, dass eine sequentielle Gasturbine (1) bereitgestellt wird, die eine Hochdruckturbine (5) und eine Niederdruckturbine (7) aufweist.

9. Verfahren gemäß Anspruch 7, wobei der Schritt a) zum Bereitstellen einer Gasturbinenanordnung dadurch durchgeführt wird, dass eine sequentielle Gasturbine (20) bereitgestellt wird, die eine Mehrzahl von Rohrbrennkammern (22) aufweist.

10. Verfahren gemäß einem der vorhergehenden Ansprüche 7 bis 9, wobei der Schritt c) zum Ersetzen der bestehenden Membrandichtungen (46) durch die Dichtungen (46 und 60) gemäß Anspruch 1 dadurch durchgeführt wird, dass Streifendichtungen (60) als Dichtungen hinzugefügt werden, die an der Trennfläche zwischen Brennkammer und Turbine angeordnet werden.

## Revendications

1. Turbine à gaz pour une centrale électrique ; la turbine à gaz (1, 20) comprenant :
- au moins une turbine (5, 7, 21, 34) prévue avec une première rangée d'aubes de stator (16, 36) configurées pour guider un flux de gaz chaud (36) ; chaque aube (16, 39) comprenant une plateforme (41) ;
- une chambre de combustion comprenant un carter interne (52) ;
- un dispositif d'étanchéité à membrane s'étendant à partir du carter (52) de la chambre de combustion vers la plateforme d'aube (41) pour isoler le gaz chaud s'écoulant au-dessus de la plateforme d'aube (41) d'un air de refroidissement à pression plus élevée s'écoulant au-dessous de la plateforme d'aube (41) ;
l'agencement d'étanchéité comprend un joint d'étanchéité à membrane (46) ;
dans laquelle le joint d'étanchéité à membrane (46) comprend :
- une extrémité interne (47) logée dans une rainure (51) obtenue dans le carter (52) de chambre à combustion, la rainure (51) étant prévue avec une face en amont (61) ;
- une extrémité externe (48) logée dans une rainure (53) obtenue dans la plateforme d'aube (41) ;
- une membrane (49) raccordant l'extrémité interne (47) à l'extrémité externe (48) ;
**caractérisée en ce que** l'agencement d'étanchéité comprend un joint d'étanchéité en bande (60) logé dans la rainure de carter (51) et agencé entre l'extrémité interne (47) du joint d'étanchéité à membrane (46) et la face en amont (61) de la rainure de carter (51) ;
dans laquelle une broche axiale (65) est prévue en étant configurée pour garder en position circonférentielle, le joint d'étanchéité en bande (60) à l'intérieur de la rainure de carter (51) ; le carter (52) et le joint d'étanchéité en bande (60) comprenant des trous axiaux (64, 66) pour loger la broche (65).

2. Turbine à gaz selon l'une quelconque des revendications précédentes, dans laquelle la face en amont du joint d'étanchéité en bande (60) et la face en amont de la rainure de carter (51) sont formées pour éviter des mouvements axiaux relatifs.

3. Turbine à gaz selon la revendication 2, dans laquelle le joint d'étanchéité en bande comprend une surface en amont (61) en contact avec et correspondant à la face en amont (68) de la rainure de carter (51).

4. Turbine à gaz selon la revendication 2 ou 3, dans laquelle la rainure de carter et la bande de joint d'étanchéité ont des caractéristiques de retenue axiale (69, 70).

5. Turbine à gaz selon l'une quelconque des revendications précédentes, dans laquelle le joint d'étanchéité en bande (60) comprend une surface en aval (66) en contact avec l'extrémité interne (47) du joint d'étanchéité à membrane (46), au moins la surface en aval (66) de la bande de joint d'étanchéité étant recouverte avec un revêtement anti-usure.

6. Turbine à gaz selon l'une quelconque des revendications précédentes, dans laquelle deux moitiés de joint d'étanchéité en bande (60) sont prévues pour sceller toute la chambre de combustion à l'interface circonférentielle de turbine ; les extrémités de couplage de ces deux joints d'étanchéité en bande comprennent une partie en saillie (63) à une extrémité et une partie enfoncée (64) à l'autre extrémité.

7. Procédé pour moderniser des turbines à gaz pour une centrale électrique déjà en service ; le procédé comprenant les étapes comprenant les faits de :
a) prévoir un ensemble de turbine à gaz selon le préambule de la revendication 1, comprenant une pluralité d'anciens joints d'étanchéité à membrane unique ;
b) prévoir une pluralité de joints d'étanchéité selon la partie caractéristique de la revendication 1 ;
c) retirer les anciens joints d'étanchéité à membrane unique ;
d) agrandir la rainure de carter pour qu'elle soit appropriée pour loger l'agencement d'étanchéité selon la partie caractéristique de la revendication 1 ;
e) agencer les joints d'étanchéité selon la partie caractéristique de la revendication 1 dans la rainure de carter agrandie.

8. Procédé selon la revendication 7, dans lequel l'étape a) comprenant le fait de prévoir un ensemble de turbine à gaz est réalisée en prévoyant une turbine à gaz séquentielle (1) comprenant une turbine à haute pression (5) et une turbine à basse pression (7).

9. Procédé selon la revendication 7, dans lequel l'étape a) comprenant le fait de prévoir un ensemble de turbine à gaz est réalisée en prévoyant une turbine à gaz séquentielle (20) comprenant une pluralité de chambres de combustion tubulaires (22).

10. Procédé selon l'une quelconque des revendications 7 à 9, dans lequel l'étape c) comprenant le fait de remplacer les anciens joints d'étanchéité à membrane (46) par les joints d'étanchéité (46 et 60) selon la revendication 1 est réalisée en ajoutant un joint d'étanchéité (des joints d'étanchéité) en bande (60) disposé(s) à l'interface entre la chambre de combustion et la turbine.
